# FASCICULE DE BREVET EUROPEEN

(11) **EP 2 407 758 B1**
(45) Date de publication et mention de la délivrance du brevet: **09.10.2013**
(21) Numéro de dépôt: 11160013.6
(22) Date de dépôt: 28.03.2011
(51) Int. Cl.: G01G 17/04

(54) **Dispositif de pesage, installation et procédé correspondants**
Wiegevorrichtung, entsprechende Anlage und entsprechendes Verfahren
Weighing device, corresponding facility and method

(30) Priorité: 15.07.2010 FR 1055752
(43) Date de publication de la demande: 18.01.2012
(73) Titulaire: L'Air Liquide Société Anonyme pour l'Etude et l'Exploitation des Procédés Georges Claude, 75007 Paris (FR)
(72) Inventeur: Hocq, Gilbert, 61200, Argentan (FR); Taupin, Jean-Yves, 61230, Gace (FR)
(74) Mandataire: De Cuenca, Emmanuel Jaime

(56) Documents cités:
- EP-A1- 0 853 235
- EP-A1- 1 154 245
- EP-A1- 2 015 036
- DE-A1- 1 573 105
- GB-A- 2 184 852
- US-A- 4 382 478
- US-A1- 2005 126 277
- US-B1- 7 521 638

## Description

La présente invention concerne un dispositif de pesage pour bouteille de fluide sous pression, son procédé d'utilisation ainsi qu'une installation munie d'un tel dispositif.

De nombreuses applications industrielles utilisent des bouteilles ou cylindres de grande taille. Pour anticiper un changement de bouteille et éviter d'interrompre l'application, il est connu d'utiliser des systèmes de détection du niveau de fluide au sein d'une ou des bouteilles de l'installation. En particulier, un système connu consiste à contrôler la masse d'une bouteille via une balance qui signale par une alarme un niveau bas déterminé (généralement 10% de la charge nominale).

Les outils de pesage sont cependant souvent mal adaptés aux grandes bouteilles de gaz liquéfié (notamment de 20 à 90 litres en volume) qui ont des masses pouvant être comprises entre 20 et 150 kg.

De ce fait, la pose et la dépose des bouteilles sur les dispositifs de pesage connus est difficile pour les opérateurs et peut conduire à des accidents. En effet, il est souvent impossible de soulever manuellement ces bouteilles lourdes pour ces opérations. Les dispositifs de pesage connus sont par ailleurs relativement coûteux pour obtenir des précisions compatibles avec les besoins de ces applications.

Le document EP 2 015 036 A1 décrit un dispositif de pesage portable en deux parties comprenant quatre cellules de mesure de poids disposées respectivement au niveau des quatre pieds du dispositif.

Le document GB 2 184 852 A décrit un dispositif de pesage pliable dans lequel une mesure d'effort (masse) est réalisée via des jauges de contrainte en flexion disposées respectivement sur les deux faces d'une plaque intermédiaire qui se courbe sous l'action d'un poids posé sur la plaque supérieure. La masse pesée est obtenue par calcul de conversion de la déformation géométrique.

Un but de la présente invention est de pallier tout ou partie des inconvénients de l'art antérieur relevés ci-dessus.

A cette fin, le dispositif de pesage selon l'invention, par ailleurs conforme à la définition générique qu'en donne le préambule ci-dessus, est defini par la revendication 1.

Par ailleurs, des modes de réalisation de l'invention peuvent comporter l'une ou plusieurs des caractéristiques suivantes :
- la surface supérieure de l'un au moins des plateaux comprend au moins une protubérance formant une butée de positionnement et/ou de blocage latéral pour une bouteille disposée sur ledit plateau,
- la surface supérieure de chaque plateau comprend deux protubérances espacées l'une de l'autre, les quatre protubérances des deux plateaux réunis formant quatre butées de blocage destinées à maintenir ou positionner une bouteille disposée sur les plateaux entre lesdites protubérances,
- le dispositif comporte des liens souples ou rigides reliant les protubérances d'un même plateau,
- chaque plateau comporte au moins deux organes de mesure d'une grandeur physique représentative de la masse posée sur ledit plateau,
- les organes de mesure d'une grandeur physique représentative de la masse posée sur ledit plateau comprennent un capteur électronique tel que l'un parmi : un capteur d'effort piézoélectrique, une jauge de contrainte piézo-résistive, un capteur d'effort de traction, un capteur d'effort de compression, un capteur d'effort à flexion,
- les liens reliant les protubérances d'un même plateau comprennent des gaines abritant des câbles reliant les capteurs électroniques et le dispositif de restitution de données,
- les plateaux sont reliés par une liaison mécanique souple, flexible ou pliable,
- la liaison entre les plateaux comprend une gaine abritant un ou des câbles reliant les capteurs électroniques au dispositif de restitution de données,
- la liaison entre les plateaux comprend une gaine abritant un ou des câbles reliant les capteurs électroniques au dispositif de restitution de données,
- les plateaux sont reliés par une liaison mécanique souple, flexible, pliable ou télescopique,
- la liaison entre les plateaux comprend une gaine abritant un ou des câbles reliant les capteurs électroniques au dispositif de restitution de données.

L'invention concerne également une installation de fourniture d'un fluide à un utilisateur à partir d'au moins une bouteille, l'installation comprenant au moins un dispositif de pesage d'une bouteille de l'installation, le dispositif de pesage étant conforme à l'une quelconque des caractéristiques ci-dessus ou ci-après et le dispositif de restitution de données transmettant ou affichant une information représentative d'un état de remplissage de ladite bouteille.

L'invention concerne également un procédé de pose d'une bouteille de fluide sous pression sur un dispositif de pesage conforme à l'une quelconque des caractéristiques ci-dessus ou ci-après, le procédé comprenant :
- une étape de pose des plateaux écartés autour de la base de la bouteille,
- une étape de basculement de la bouteille pour relever un premier côté de la base de la bouteille,
- une étape de rapprochement des plateaux par insertion d'un premier plateau sous la partie relevée de la base de la bouteille,
- une étape d'insertion d'un second plateau sous l'autre partie de la base de la bouteille pour maintenir la bouteille en appui sur les deux plateaux rapprochés.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en perspective et schématique d'un dispositif de pesage,
- la figure 2 représente une vue en coupe schématique du dispositif de pesage, selon la ligne AA de la figure 1,
- la figure 3 représente une vue schématique et partielle illustrant la structure d'une installation de délivrance de gaz utilisant un dispositif de pesage selon l'invention,
- la figure 4 représente une vue en coupe longitudinale, schématique et partielle, d'un dispositif de pesage
- la figure 5 représente une vue en perspective et schématique illustrant une autre variante de réalisation d'un dispositif de pesage selon l'invention,
- les figures 6 et 7 illustrent des sections transversales respectivement selon les lignes AA et BB de la figure 5.

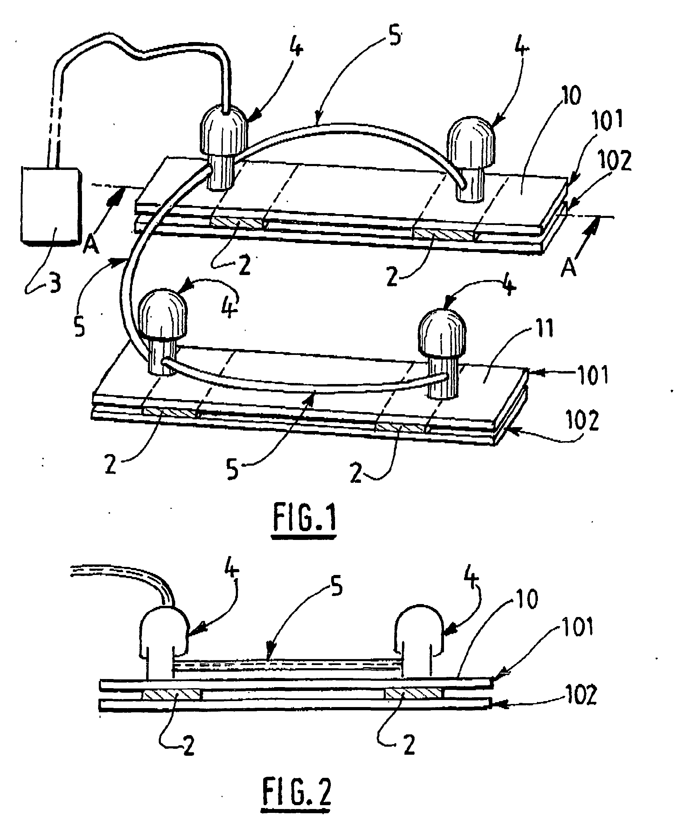

En se référant à la figure 1, le dispositif de pesage, notamment pour bouteille de gaz liquéfié, comprend deux plateaux 10, 11 distincts qui peuvent être sélectivement écartés ou rapprochés.

Les deux plateaux 10, 11 sont par exemple reliés l'un à l'autre via un lien 5 souple décrit plus en détail ci-après.

Au moins l'un et de préférence les deux plateaux 10, 11 comprennent au moins un organe 2 de mesure d'une grandeur physique représentative de la masse posée sur ledit plateau 10, 11. Comme représenté, de préférence chaque plateau 10, 11 comprend deux organe 2 de mesure.

. Les organes 2 de mesure comprennent de préférence un capteur électronique tel que l'un parmi : un capteur d'effort piézoélectrique, une jauge de contrainte piézo-résistive, un capteur d'effort de traction, un capteur d'effort de compression, un capteur d'effort à flexion.

De préférence, les deux organes 2 de mesure de chaque plateau 10, 11 sont constitués chacun d'une jauge de contrainte piézorésistive, par exemple celle commercialisée par la société ZEMIC sous la référence EB9172.

Comme visible aux figures 1 et 2, les organes 2 de mesure peuvent être avantageusement disposés en sandwich entre deux plaques respectivement supérieure 101 et inférieure 102 formant le plateau 10, 11. La plaque inférieure 102 est disposée sur le sol et la plaque supérieure 101 formant une surface d'appui pour une bouteille 6.

Ainsi, la pose d'une bouteille 6 sur la face supérieure de la plaque 101 supérieure vient comprimer les organes 2 de mesure. En réaction les organes 2 de mesure génèrent un signal électrique représentatif de la masse posée sur le plateau 10, 11.

L'épaisseur des plateaux peut être comprise par exemple entre 1 et 10 cm. Les plaques 101, 102 peuvent être parallélépipédiques et peuvent avoir une largeur de l'ordre de 200mm et une longueur de l'ordre de 300mm.

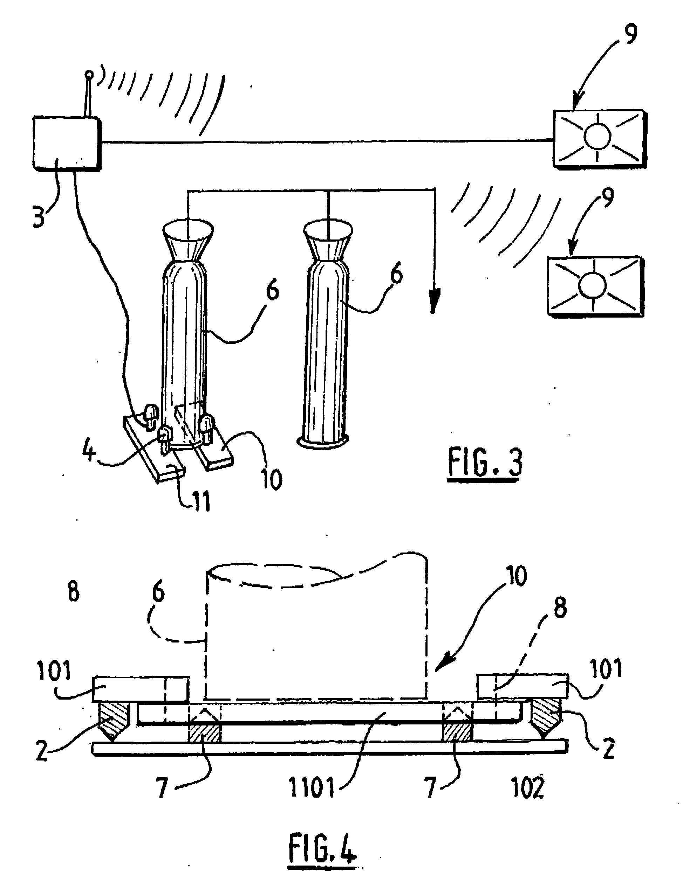

Ainsi, la figure 4 représente une variante de réalisation d'un plateau 10 dans laquelle les deux les organes 2 de mesure sont pris en sandwich entre d'une part un plaque inférieure 102 et, d'autre part, deux plaques 101 supérieures respectives situées aux extrémités de la plaque 102 inférieure. Contrairement au mode de réalisation des figures 1 et 2, la bouteille 6 n'est pas posée sur lesdites plaques 101 supérieures mais sur une plaque 1101 centrale fixée par ses deux extrémités (via par exemple des axes de fixation 8) aux deux plaques 101 supérieures. Ainsi, la plaque 1101 centrale définit la surface d'appui pour une bouteille. La plaque 1101 centrale est écartée de la plaque 102 inférieure. Lors de la pose d'une bouteille 6 sur la plaque 1101 centrale, l'ensemble constitué des plaques supérieures 101 et de la plaque 1101 centrale vient se rapprocher de la plaque 102 inférieure et les organes 2 de mesure sont ainsi comprimés. Comme représenté, la plaque 102 inférieure peut comporter des pions 7 de guidage coopérant avec des alésages former dans la plaque 1101 centrale pour guider la translation de la plaque 1101 centrale relativement à la plaque 102 inférieure.

Ce mode de réalisation de la figure 4 permet de réduire encore un peu plus l'épaisseur des plateaux 10, 11, ce qui facilite la pose et la dépose de bouteilles.

Comme représenté à la figure 1, chaque plateau 10, 11 (face supérieure des plaques 101 supérieures) peut comprendre deux protubérances 4 espacées l'une de l'autre pour former des butées de blocage latéral pour une bouteille disposée sur ledit plateau 10, 11. Les quatre protubérances 4 des deux plateaux 10, 11 réunis forment ainsi quatre butées de blocage destinées à maintenir latéralement une bouteille disposée sur les plateaux 10, 11 entre lesdites protubérances. Les protubérances 4 peuvent avantageusement constituer de cales de positionnement de la bouteille sur les plateaux 10, 11. Par exemple, la bouteille 6 est considérée parfaitement positionnée sur les plateaux 10, 11 lorsque ces protubérances 4 sont toutes au plus près de la bouteille 6.

Des liens 5 souples ou rigides peuvent relier les protubérances 4 d'un même plateau 10, 11 pour former une barrière supplémentaire de maintien et de positionnement de la bouteille 6 sur les plateaux 10, 11. Ces liens 5 peuvent notamment être courbes pour décrire une forme circulaire destinée à entourer la base circulaire des bouteilles cylindriques.

Les liens 5 reliant les protubérances 4 peuvent comporter des gaines tubulaires abritant en leur sein les câbles reliant les organes 2 de mesure électroniques à un dispositif 3 de restitution de données.

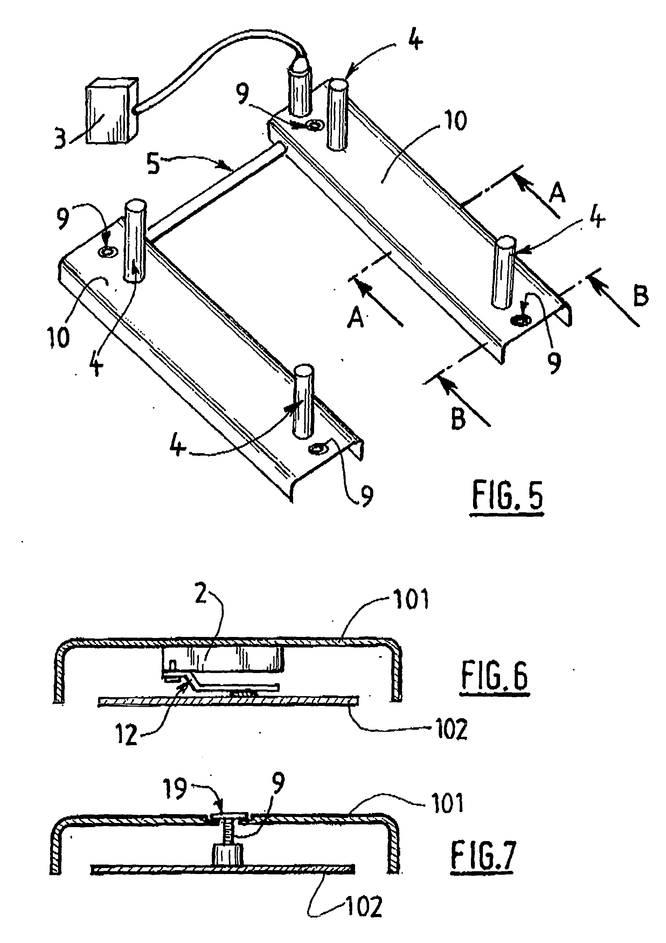

Les figures 5 à 7 illustrent l'invention dans laquelle la plaque supérieure 101 a un profil de forme générale en U inversé. Les éléments identiques à ceux décrits ci-dessus sont désignés par les mêmes références numériques.

La surface convexe du U forme la surface d'appui pour le pesage.

La plaque inférieure 102, par exemple plane, est suspendue à la plaque supérieure 101 à l'intérieur du U. Par exemple, la plaque inférieure 102 comprend deux pions 9 de guidage (tel que des vis) qui peuvent coulisser dans des orifices respectifs 19 de la plaque supérieure 101. L'extrémité supérieure évasée du pion 5 suspend la plaque inférieure 102 à la plaque supérieure 101 (voir figure 4).

La section en U de la plaque supérieure 101 rigidifie l'ensemble et forme un volume dans lequel sont disposés les organes de mesure 2, les circuits électriques (câbles et autres).

Les organes de mesure 2 peuvent être fixés à l'intérieur du U sur la plaque supérieure 101. Un levier 12 solidaire le l'organe de mesure peut venir en appui sur la plaque inférieure 102 pour mesurer la masse selon l'écartement relatif entre les plaques 101, 102 (voir figure 6).

On conçoit donc ainsi que le dispositif de pesage selon l'invention, tout en étant de structure simple et peu coûteuse, permet une pose et une dépose aisées des bouteilles 6.

En effet, pour poser une bouteille 6 de grande taille (donc lourde) sur le dispositif de pesage, un opérateur peut procéder comme suit.

Dans un premier temps, les deux plateaux 10, 11 peuvent être posés au sol écartés autour de la base de la bouteille 6 qui est en position verticale. L'opérateur peut ensuite basculer légèrement la bouteille 6 en la tenant par les mains dans la partie haute de façon à relever un premier côté de la base de la bouteille 6 par rapport au sol.

Simultanément, l'opérateur peut rapprocher un plateau 10, 11 de l'autre plateau 11, 10 en l'insérant sous la partie relevée de la base de la bouteille 6 (l'opérateur réalise cette insertion par exemple avec un pied). En basculant légèrement la bouteille à nouveau dans l'autre sens, l'opérateur peut insérer de la même façon le second plateau 11, 10 sous l'autre partie de la base de la bouteille 6. La bouteille est au final posée en appui stable sur les deux plateaux 10, 11 rapprochés. La mesure de la masse peut commencer.

La figure 3 représente une installation de fourniture d'un fluide à un utilisateur U à partir d'au moins une bouteille 6. Au moins une des bouteilles 6 de l'installation est pesée par un dispositif de pesage tel que décrit ci-dessus.

Le dispositif 3 de restitution de données du dispositif de pesage affiche 3 ou transmet à distance des informations représentatives de l'état de remplissage de ladite bouteille 6. Par exemple il déclenche une alarme 9 en cas de mesure d'une valeur déterminée.

## Revendications

1. Dispositif de pesage pour bouteille de fluide sous pression comprenant deux plateaux (10, 11) distincts qui peuvent être sélectivement écartés ou rapprochés pour permettre de placer une bouteille en appui stable à cheval sur les deux plateaux (10, 11) disposés côte à côte, au moins l'un des deux plateaux (10, 11) comprenant au moins un organe (2) de mesure d'une grandeur physique représentative de la masse posée sur ledit plateau (10, 11), le dispositif comprenant également un dispositif (3) de restitution de données relié à chacun du ou des organes (2) de mesure pour indiquer et/ou transmettre sélectivement une grandeur physique représentative de la masse courante disposée sur les plateaux (10, 11), **caractérisé en ce que** la surface extérieure de chaque plateau (10, 11) comprend deux protubérances (4) espacées l'une de l'autre, les quatre protubérances (4) des deux plateaux (10, 11) réunis formant quatre butées de blocage destinées à maintenir ou positionner une bouteille disposée sur les plateaux (10, 11) entre lesdites protubérances (4), et **en ce que** les protubérances (4) de chaque plateau (10, 11) sont disposées respectivement à proximité de deux extrémités du plateau (10, 11), les quatre protubérances (4) du dispositif formant les sommets d'un quadrilatère dans lequel est destinée à être déposée la base de la bouteille en vue de son pesage, et **en ce que** les organes (2) de mesure sont disposés en sandwich entre deux plaques respectivement supérieure (101) et inférieure (102), la plaque inférieure (102) étant destinée à reposer sur le sol, la plaque supérieure (101) formant une surface d'appui pour une bouteille (6) ou étant liée mécaniquement à une pièce (1101) formant une surface d'appui pour une bouteille (6), l'organe (2) de mesure étant solidaire de l'une des plaques (101, 102) et comprend un levier (12) en appui contre l'autre plaque (102, 101) pour transmettre un signal effort selon l'écartement relatif des plaques (101, 102), et
**en ce que** la plaque (101) supérieure de chaque plateau (10, 11) a une forme oblongue de section de forme générale en U, la surface convexe du U formant la surface d'appui pour une bouteille, en position d'utilisation, les deux bords de la plaque (101) formant les pieds du U étant orientés vers le sol, et
**en ce que** la plaque inférieure (102) de chaque plateau (10, 11) est suspendue à la plaque supérieure (101) avec possibilité de débattement relatif entre les deux plaques (101, 102), et
**en ce que** les plaques supérieure (101) et inférieure (102) de chaque plateau (10, 11) sont guidées relativement via deux pions (9) de guidage selon un mouvement d'écartement ou de rapprochement selon une direction perpendiculaire au plan de la surface d'appui pour une bouteille,
chaque plateau (10, 11) comprenant deux pions (9) de guidage solidaires de l'une des plaques (101, 102) et coulissant dans un orifice (19) ou logement solidaire de l'autre plaque (101, 102), la plaque inférieure étant
suspendue à la plaque supérieure (101) via les pions (9) de guidage.

2. Dispositif selon la revendication 1, **caractérisé en ce qu'**il comporte des liens (5) souples ou rigides reliant les protubérances (4) d'un même plateau (10,11).

3. Dispositif selon l'une quelconque des revendications 1 ou 2, **caractérisé en ce que** chaque plateau (10, 11) comporte au moins deux organes (2) de mesure d'une grandeur physique représentative de la masse posée sur ledit plateau (10, 11).

4. Dispositif selon l'une quelconque des revendications 1 à 3, **caractérisé en ce que** les organes (2) de mesure d'une grandeur physique représentative de la masse posée sur ledit plateau (10, 11) comprennent un capteur électronique tel que l'un parmi : un capteur d'effort piézoélectrique, une jauge de contrainte piézo-résistive, un capteur d'effort de traction, un capteur d'effort de compression, un capteur d'effort à flexion.

5. Dispositif selon l'une quelconque des revendications 1 à 4, **caractérisé en ce que** le volume du U formé par la plaque supérieure (101) abrite l'organe de mesure et des câbles électriques reliés à l'organe (2) de mesure.

6. Installation de fourniture d'un fluide à un utilisateur (U) à partir d'au moins une bouteille (6), l'installation comprenant au moins un dispositif de pesage d'une bouteille (6) de l'installation, **caractérisé en ce que** le dispositif de pesage est conforme à l'une quelconque des revendications 1 à 5 et **en ce que** le dispositif (3) de restitution de données transmet ou affiche une information représentative d'un état de remplissage de ladite bouteille (6).

7. Procédé de pose d'une bouteille de fluide sous pression sur un dispositif de pesage conforme à l'une quelconque des revendications 1 à 6, **caractérisé en ce qu'**il comprend :
- une étape de pose des plateaux (10, 11) écartés autour de la base de la bouteille (6),
- une étape de basculement de la bouteille (6) pour relever un premier côté de la base de la bouteille (6),
- une étape de rapprochement des plateaux (10, 11) par insertion d'un premier plateau (10, 11) sous la partie relevée de la base de la bouteille (6),
- une étape d'insertion d'un second plateau (10, 11) sous l'autre partie de la base de la bouteille (6) pour maintenir la bouteille en appui sur les deux plateaux (10, 11) rapprochés.

## Patentansprüche

1. Wiegevorrichtung für eine Flasche mit einem unter Druck stehenden Fluid, umfassend zwei unterschiedliche Wiegeschalen (10, 11), die selektiv voneinander beabstandet oder einander angenähert werden können, um eine Flasche in stabiler Abstützung rittlings auf den zwei Wiegeschalen (10, 11), die nebeneinander angeordnet sind, platzieren zu können, wobei mindestens eine der zwei Wiegeschalen (10, 11) mindestens ein Organ (2) zum Messen einer physikalischen Größe umfasst, die für die auf die Wiegeschale (10, 11) gestellte Masse repräsentativ ist, wobei die Vorrichtung auch eine Vorrichtung (3) zur Wiedergabe von Daten umfasst, die mit jedem des oder der Messorgane (2) verbunden ist, um eine physikalische Größe, die für die auf den Wiegeschalen (10, 11) angeordnete aktuelle Masse repräsentativ ist, selektiv anzuzeigen und/oder zu übertragen, **dadurch gekennzeichnet, dass** die äußere Fläche jeder Wiegeschale (10, 11) zwei Ausstülpungen (4) umfasst, die voneinander beabstandet sind, wobei die vier Ausstülpungen (4) der zwei verbundenen Wiegeschalen (10, 11) vier Blockieranschläge bilden, die dazu bestimmt sind, eine auf den Wiegeschalen (10, 11) angeordnete Flasche zwischen den Ausstülpungen (4) zu halten oder zu positionieren, und dass die Ausstülpungen (4) jeder Wiegeschale (10, 11) jeweils in der Nähe von zwei Enden der Wiegeschale (10, 11) angeordnet sind, wobei die vier Ausstülpungen (4) der Vorrichtung die Scheitel eines Vierecks bilden, in dem die Basis der Flasche zwecks ihrer Wiegung abgestellt werden soll, und dass die Messorgane (2) sandwichartig zwischen zwei Platten, einer oberen (101) bzw. einer unteren (102), angeordnet sind, wobei die untere Platte (102) dazu bestimmt ist, auf dem Boden aufzuliegen, wobei die obere Platte (101) eine Abstützfläche für eine Flasche (6) bildet oder mechanisch mit einem Teil (1101) verbunden ist, das eine Abstützfläche für eine Flasche (6) bildet, wobei das Messorgan (2) mit einer der Platten (101, 102) fest verbunden ist und einen Hebel (12) in Abstützung gegen die andere Platte (101, 102) umfasst, um ein Kraftsignal gemäß der relativen Beabstandung der Platten (101, 102) zu übertragen, und dass die obere Platte (101) jeder Wiegeschale (10, 11) eine längliche Form mit einem im Allgemeinen U-förmigen Querschnitt hat, wobei die konvexe Fläche des U die Abstützfläche für eine Flasche (6), in Benutzungsposition, bildet, wobei die zwei Ränder der Platte (101), welche die Füße des U bilden, zum Boden hin ausgerichtet sind, und dass die untere Wiegeschale (102) jeder Platte (10, 11) an der oberen Platte (101) mit der Möglichkeit der relativen Ausfederung zwischen den zwei Platten (101, 102) aufgehängt ist, und dass die obere (101) und die untere (102) Platte jeder Wiegeschale (10, 11) über zwei Führungsstifte (9) in einer Beabstandungs- oder Annäherungsbewegung relativ zu einander in einer Richtung geführt werden, die zu der Ebene der Abstützfläche für eine Flasche senkrecht ist, wobei jede Wiegeschale (10, 11) zwei Führungsstifte (9) umfasst, die mit einer der Platten (101, 102) fest verbunden sind und in einer Öffnung (19) oder einem Sitz gleiten, der mit der anderen Platte (101, 102) fest verbunden ist, wobei die untere Platte über die Führungsstifte (9) an der oberen Platte (101) aufgehängt ist.

2. Vorrichtung nach Anspruch 1, **dadurch gekennzeichnet, dass** sie biegsame oder starre Bänder (5) aufweist, welche die Ausstülpungen (4) ein und derselben Wiegeschale (10, 11) verbinden.

3. Vorrichtung nach einem der Ansprüche 1 oder 2, **dadurch gekennzeichnet, dass** jede Wiegeschale (10, 11) mindestens zwei Organe (2) zum Messen einer physikalischen Größe aufweist, die für die auf die Wiegeschale (10, 11) gestellte Masse repräsentativ ist.

4. Vorrichtung nach einem der Ansprüche 1 bis 3, **dadurch gekennzeichnet, dass** die Organe (2) zum Messen einer physikalischen Größe, die für die auf die Wiegeschale (10, 11) gestellte Masse repräsentativ ist, einen elektronischen Geber wie einer unter den Folgenden umfassen: einen piezoelektrischen Kraftaufnehmer, einen piezoresistiven Dehnungsmessstreifen, einen Zugkraftaufnehmer, einen Druckkraftaufnehmer, einen Biegekraftaufnehmer.

5. Vorrichtung nach einem der Ansprüche 1 bis 4, **dadurch gekennzeichnet, dass** das Volumen des U, das durch die obere Platte (101) gebildet wird, das Messorgan und elektrische Kabel, die mit dem Messorgan (2) verbunden sind, aufnimmt.

6. Installation zum Bereitstellen eines Fluids an einen Benutzer (U) aus mindestens einer Flasche (6), wobei die Installation mindestens eine Vorrichtung zum Wiegen einer Flasche (6) der Installation umfasst, **dadurch gekennzeichnet, dass** die Wiegevorrichtung einem der Ansprüche 1 bis 5 entspricht und dass die Vorrichtung (3) zur Wiedergabe von Daten eine Information überträgt oder anzeigt, die für einen Füllzustand der Flasche (6) repräsentativ ist.

7. Verfahren zum Stellen einer Flasche mit einem unter Druck stehenden Fluid auf eine Wiegevorrichtung nach einem der Ansprüche 1 bis 6, **dadurch gekennzeichnet, dass** es Folgendes umfasst:
- einen Schritt des Anordnens der beabstandeten Wiegeschalen (10, 11) um die Basis der Flasche (6) herum,
- einen Schritt des Schwenkens der Flasche (6), um eine erste Seite der Basis der Flasche (6) anzuheben,
- einen Schritt des Annäherns der Wiegeschalen (10, 11) durch Einbringen einer ersten Wiegeschale (10, 11) unter den angehobenen Teil der Basis der Flasche (6),
- einen Schritt des Einbringens einer zweiten Wiegeschale (10, 11) unter den anderen Teil der Basis der Flasche (6), um die Flasche in Abstützung auf den zwei angenäherten Wiegeschalen (10, 11) zu halten.

## Claims

1. Weighing device for a pressurised fluid bottle, comprising two separate pans (10, 11) which can be moved apart or closer together selectively in order to make it possible to place a bottle in a stably supported manner astride the two pans (10, 11) arranged side by side, at least one of the two pans (10, 11) comprising at least one member (2) for measuring a physical quantity representative of the mass placed on said pan (10, 11), the device also comprising a data retrieval device (3) connected to each of the measuring members (2) for indicating and/or transmitting selectively a physical quantity representative of the current mass arranged on the pans (10, 11), **characterised in that** the outer surface of each pan (10, 11) comprises two mutually spaced protrusions (4), the four protrusions (4) of the two pans (10, 11) put together forming four blocking stops for holding or positioning a bottle arranged on the pans (10, 11) between said protrusions (4), and **in that** the protrusions (4) of each pan (10, 11) are arranged respectively close to two ends of the pan (10, 11), the four protrusions (4) of the device forming the vertices of a quadrilateral in which the base of the bottle is to be arranged with a view to weighing it, and **in that** the measuring members (2) are sandwiched between two plates, an upper plate (101) and a lower plate (102), the lower plate (102) being intended to rest on the floor, the upper plate (101) forming a support surface for a bottle (6) or being mechanically connected to a part (1101) forming a support surface for a bottle (6), the measuring members (2) being rigidly connected to one of the plates (101, 102) and comprising a lever (12) resting against the other plate (102, 101) for transmitting a force signal on the basis of the relative spacing of the plates (101, 102), and **in that** the upper plate (101) of each pan (10, 11) has an oblong shape having a generally U-shaped cross-section, the convex surface of the U forming the support surface for a bottle, in a position of use, the two edges of the plate (101) forming the feet of the U being oriented towards the floor, and **in that** the lower plate (102) of each pan (10, 11) is suspended from the upper plate (101) with the option of relative displacement between the two plates (101, 102), and **in that** the upper (101) and lower (102) plates of each pan (10, 11) are guided relatively via two guide pins (9) in a movement apart or closer together in a direction perpendicular to the plane of the support surface for a bottle, each pan (10, 11) comprising two guide pins (9) rigidly connected to one of the plates (101, 102) and sliding in an integral orifice (19) or recess of the other plate (101, 102), the lower plate being suspended from the upper plate (101) via the guide pins (9).

2. Device according to claim 1, **characterised in that** it comprises flexible or rigid connections (5) connecting the protrusions (4) of a same pan (10, 11).

3. Device according to either claim 1 or claim 2, **characterised in that** each pan (10, 11) comprises at least two members (2) for measuring a physical quantity representative of the mass placed on said pan (10, 11).

4. Device according to any of claims 1 to 3, **characterised in that** the members (2) for measuring a physical quantity representative of the mass placed on said pan (10, 11) comprise an electronic sensor such as one selected from: a piezoelectric force sensor, a piezoresistive strain gauge, a tensile force sensor, a compressive force sensor and a bending force sensor.

5. Device according to any of claims 1 to 4, **characterised in that** the volume of the U formed by the upper plate (101) accommodates the measuring member and electric cables connected to the measuring member (2).

6. System for providing a user (U) with a fluid from at least one bottle (6), the system comprising at least one device for weighing a bottle (6) of the system, **characterised in that** the weighing device is in accordance with any of claims 1 to 5 and **in that** the data retrieval device (3) transmits or displays information representative of a filling state of said bottle (6).

7. Method for placing a pressurised fluid bottle on a weighing device according to any of claims 1 to 6, **characterised in that** it comprises:
- a step of placing the pans (10, 11) spaced apart around the base of the bottle (6),
- a step of tipping the bottle (6) so as to raise a first side of the base of the bottle (6),
- a step of moving the pans (10, 11) closer together by inserting a first pan (10, 11) under the raised portion of the base of the bottle (6),
- a step of inserting a second pan (10, 11) under the other portion of the base of the bottle (6) so as to hold the bottle supported on the two pans (10, 11) which have been moved closer together.
